# EUROPÄISCHE PATENTSCHRIFT

(11) **EP 2 236 043 B1**
(45) Veröffentlichungstag und Bekanntmachung des Hinweises auf die Patenterteilung: **04.01.2012**
(21) Anmeldenummer: 10159031.3
(22) Anmeldetag: 01.04.2010
(51) Int. Cl.: A23L 1/221, A23L 1/236, A23L 1/22

(54) **Verfahren zur Herstellung einer Extraktionssubstanz aus Blättern der süßen Brombeere**
Method for producing an extraction substance from leaves of the Chinese blackberry
Procédé de fabrication d'une substance d'extraction à partir de feuilles de mûre sucrée

(30) Priorität: 03.04.2009 DE 102009016171
(43) Veröffentlichungstag der Anmeldung: 06.10.2010
(73) Patentinhaber: Plantextrakt GmbH&Co. Kg, 91487 Vestenbergsgreuth (DE)
(72) Erfinder: Kler, Adolf, 91413 Neustadt / Aisch (DE); Kriesl, Erwin, 90579 Langenzenn (DE)
(74) Vertreter: Hübner, Gerd

(56) Entgegenhaltungen:
- CN-A- 101 003 552
- CN-A- 101 069 533
- US-A1- 2005 152 997
- US-B1- 6 228 996
- DATABASE WPI Week 200826 Thomson Scientific, London, GB; AN 2008-D61023 XP002590401 & JP 2008 043287 A (LOTTE CO LTD) 28. Februar 2008 (2008-02-28)

## Beschreibung

Die Erfindung betrifft ein Verfahren zur Herstellung eines Pflanzenextraktes aus Blättern der süßen Brombeere (Rubus chingii, var. Suavissimus), insbesondere für den Einsatz als Lebensmittelzutat.

Zum Hintergrund der Erfindung ist festzuhalten, dass Pflanzenextrakte heute in vielfältiger Weise bei der Herstellung von Lebensmitteln als übliche Zutaten verwendet werden, so z.B. im Bereich der Heiß- und Kaltgetränke in unterschiedlichsten Angebotsformen, bei der Herstellung von Süßwaren, bei Milchprodukten, Spirituosen, Backwaren etc. Im Wesentlichen kommen diese Pflanzenextrakte dabei aus geschmacklichen Gründen zur Anwendung, etwa um einem Produkt die spezifischen aromatischen Eigenschaften des verwendeten Pflanzenextraktes zu verleihen.

Neben ihren angesprochenen aromatischen Eigenschaften weisen viele Pflanzenextrakte noch weitere, interessante Eigenschaften auf, die häufig integraler Bestandteil des Lebensmittels sind. So zeigt z.B. Hibiskusextrakt neben seinen sauren, fruchtig-aromatischen auch färbende Eigenschaften, die dazu führen, dass mit Hibiskusextrakt hergestellte Getränke eine intensiv rote, optisch ansprechende Färbung aufweisen. Diese kann auf die pflanzeneigenen Anthocyane zurückgeführt werden.

Schwarz- oder Grüntee-Extrakte zeigen als weiteres Beispiel, dass bedingt durch ihren Gehalt an Catechinen und polymeren Phenolen ein angenehm bitterer, leicht adstringierender Geschmack festgestellt werden kann.

Von ganz besonderem Interesse jedoch sind Pflanzen und PflanzenExtrakte, die süßende Eigenschaften oder solche aufweisen, die im Zusammenspiel mit Zucker oder auch Aromen im Sinne einer synergistischen Verstärkung verwendet werden können. Dies ist besonders auch im Hinblick auf eine allgemeine Reduktion der Zuckeraufnahme wichtig. Übergewicht und Diabetes 2 sind heute bereits Volkskrankheiten und werden nach allen Prognosen weiter zunehmen.

Zur Herstellung zuckerfreier oder zuckerreduzierter Lebensmittel, insbesondere von Getränken, sind aktuell eine Reihe künstlicher oder synthetischer Süßstoffe zugelassen. Nachteilig hierbei sind oft außerordentlich süße und lang anhaltende Geschmackseindrücke, teils mit kräftigem unangenehmem Beigeschmack. In den letzten Jahren hat daher das Interesse an natürlichen oder sogar ökologisch hergestellten Lebensmitteln und Lebensmittelzutaten deutlich zugenommen.

Die chinesische oder süße Brombeere (Rubus chingii, var. Suavissimus) gehört zur Familie der Rosengewächse (Rosaceae), wie auch europäische Brombeeren und Himbeeren.

In der EU werden Blätter von Rubus chingii als Lebensmittel für den Einsatz "Teeähnliche Erzeugnisse" verwendet. In vielen Kräuter- und Früchtetees findet man süße Brombeerblätter als Rezepturbestandteil.

Aus dem Stand der Technik sind in diesem Zusammenhang verschiedene Lebensmittel und Verfahren zu deren Herstellung bekannt, bei denen süße Brombeerblätter verwendet bzw. extrahiert werden.

So beschreibt das Dokument CN 101069533 A einen "Natural sugar-free sweet-tea drink and its preparing method". Die japanische Publikation JP 2008043287A offenbart eine "Method for producing Rubus suavissimus cxtract improved in taste". Dabei werden Blätter von Rubus chingii, var. Suavissimus einer Vorbehandlung mit Alkohol oderAlkohol-Wasser-Mischungen unterzogen und danach alkoholisch oder wässrig-alkoholisch extrahiert, wobei als charakteristische Prozesseigenschaft das eigentliche Extraktionslösemittel im Alkoholgehalt niedriger liegt, als im verwendeten Vorbehandlungsmittel.

Die koreanische Patentanmeldung KR 10 2008 0016772 A beschreibt für die Vorextraktion von Blättern der Rubus chingii, var. Suavissimus einen Alkoholgehalt von > 80%, für die Nachextraktion werden maximal 60% Alkohol genannt.

Die US 6 228 996 B1 offenbart (vgl. Bespiel) die Verwendung eines Extraktes aus Blättern der süssen Brombeere (Rubus Suavissimus) in getrockneter Form als Süssmittel. Der Extrakt wird durch die Umfällung des wässrigen Extraktes der Blätter sowie das Weiterbearbeiten des verbleibendes Extraktes hergestellt.

Die zugrunde liegende Aufgabe der Erfindung war es nun, aus den Blättern der süßen Brombeere (bot.: Rubus chingii, var. Suavissimus) einen Extrakt herzustellen, der sowohl süßende Eigenschaften, gleichzeitig aber auch weitere pflanzentypische Geschmacksqualitäten aufweist und als Rubus-Suavissimus-Extrakt für die Herstellung verschiedener Lebensmittel verwendbar ist. Ziel war es dabei, nicht einen zulassungspflichtigen Süßstoff aus Rubus chingii, var. Suavissimus herzustellen, sondern ein Produkt mit süßenden Eigenschaften bei gleichzeitiger Wahrung typischer, pflanzeneigener Geschmacksnoten.

Diese Aufgabe wird durch die in Patentanspruch 1 angegebenen Verfahrensbasisschritte wie folgt gelöst:
a) wässrige Primärextraktion von vorzugsweise getrockneten süßen Brombeerblättern
b) alkoholische Umfällung des wässrigen Extraktes aus Basisschritt a),
c) Abtrennen und Verwerfen des Niederschlags aus der Umfällreaktion gemäß Basisschritt b),
d) weitere Umfällung des aus Basisschritt b) und c) verbleibenden Extraktes mit einer Calciumhydroxidlösung,
e) Abtrennen und Verwerfen des Niederschlags aus der Umfällreaktion gemäß Basisschritt d), und
f) Weiterbearbeiten des aus Basisschritt d) und e) verbleibenden Extraktes als Flüssig-, Pastös- oder Trockenextrakt.

Überraschenderweise hat sich herausgestellt, dass die nach dem beanspruchten, mehrstufigen Verfahren hergestellten Extrakte aus Rubus chingii, var. Suavissimus gute geschmackliche Eigenschaften aufweisen und als Lebensmittelzutat mit charakteristischen, leicht süßenden Eigenschaften verwendet werden können.

Überraschenderweise wurde auch festgestellt, dass diese Extrakte aromaverstärkende bzw. geschmacksabrundende Eigenschaften aufweisen, wenn die Extrakte in der angegebenen Dosierung z.B. in Getränken eingesetzt werden.

Als süßender Stoff wird in diesem Zusammenhang in erster Linie das sogenannte Rubusosid angesehen. Dabei handelt es sich um eine Verbindungsart, die den Diterpenglycosiden zugeordnet werden kann. Neben Rubusosid kommen in den Blättern noch 15 weitere Glycoside in kleinen Mengen vor. Einige dieser Minorverbindungen, die im Vergleich zu Rubusosid unterschiedlich substituiert sind, zeigen ebenfalls süße Geschmackseindrücke. Die im vorliegenden Patent beschriebenen Extrakte unterscheiden sich deutlich von Produkten nach dem Stand der Technik wie oben beschrieben.

In den abhängigen Ansprüchen sind bevorzugte Weiterbildungen des grundlegenden Herstellungsverfahrens angegeben, zu deren Erläuterung unter Vermeidung von Wiederholungen auf das Ausführungsbeispiel verwiesen wird.

Die Erfindung betrifft weiterhin eine nach dem Basisverfahren unter Trocknung des durch wässrige Primärextraktion sowie anschließender alkoholischer Umfällung und Umfällung mit einer Calciumhydroxidlösung erhaltenen Extraktes.

Eine solche Extraktionssubstanz ist in getrockneter, pastöser oder flüssiger Form als süßende und/oder aromaverstärkende Zutat bei Lebensmitteln, Getränken und/oder Aromen sowie in einer angereicherten Form als Zutat für konzentrierte Lebens- oder Nahrungsergänzungsmittel insbesondere in Form von Konzentraten, Kapseln oder Tabletten verwendbar.

Weitere Merkmale, Einzelheiten und Vorteile der Erfindung ergeben sich aus dem nachfolgend beschriebenen

### Ausführungsbeispiel:

Getrocknete Blätter in einer Menge, die im Folgenden als "(eingesetzte) Droge" bezeichnet wird, von Rubus chingii, var. Suavissimus (Rubusoidgehalt ca. 3 bis 4% bezogen Trockenmasse) werden in einem
1. Prozessschritt - entspricht Anspruch 1, Basisschritt a) -
   mit demineralisiertem Wasser bei 90 °C - 100 °C extrahiert. Das Droge/Lösungsmittelverhältnis beträgt dabei 1:5 bis 1:15. Die erhaltene Ausbeute bezogen auf die eingesetzte Droge beträgt ca. 30%. Der Gehalt an Rubusosiden beträgt nach dem ersten Prozessschritt ca. 10% bezogen auf die Extrakt-Trockensubstanz. Der nachfolgende
2. Prozessschritt - entspricht Anspruch 1, Basisschritt b) -
   besteht in einer alkoholischen Umfällung des wässrigen Extraktes. Die Alkohol-Konzentration wird dabei auf ca. 60-70% Ethanol eingestellt. Nach Separation über Zentrifugen - entspricht Anspruch 1, Basisschritt c) - werden Ausbeuten von ca. 22%, bezogen auf die eingesetzte Droge erreicht. Das Sediment wird verworfen. Die Anreicherung an Rubusosiden steigt nach Prozessschritt 2 lediglich von 10 auf 12% bezogen auf die Extrakt-Trockensubstanz an.
   Wichtiger und überraschend ist, dass durch die beschriebene Umfällung mit 60 - 70%igen Ethanol ein Extrakt erhalten wird, der eine hohe Ausbeute, aber geschmacklich wesentlich reduzierte Bitternoten aufweist. Andere pflanzentypische Noten wie z.B. krautig, lakritzartig oder röstig bleiben erhalten.
3. Prozessschritt - entspricht Anspruch 1, Basisschritt d) -
   Es erfolgt eine weitere Umfällung des Extraktes aus dem 2. Prozessschritt mittels Calciumhydroxid Ca (OH)₂. Die Lösung wird dabei mit Calciumhydroxid auf einen pH-Wert von 9 bis 13 eingestellt. Nach erneuter Separation über Zentrifugen - entspricht Anspruch 1, Basisschritte) - wird eine Ausbeute von ca. 14% bezogen auf die eingesetzte Droge erhalten. Das Sediment wird erneut verworfen. Der Gehalt an Rubusosiden beträgt nach Prozessschritt 3 ca. 18% bezogen auf die Extrakt-Trockensubstanz.
   Der so erhaltene Extrakt wird mit Säuren, z.B. Zitronensäure, auf einen pH-Wert von 5 bis 7 rückgesäuert.
   Der so erhaltene Extrakt kann je nach Anwendungszweck weiterbearbeitet - entspricht Anspruch 1, Basisschritt f) - werden. Soll keine weitere Anreicherung der Rubusoside erfolgen, kann der Extrakt getrocknet oder durch gezielten Wasserentzug pastös eingestellt werden und ist dann für den Einsatz in Lebensmitteln, z.B. Getränken, vorteilhaft.
   Wird eine Anreicherung der Rubusoside gewünscht, so schließen sich weitere Prozessschritte zur Weiterbearbeitung des aus den Basisschritten d) und e) verbleibenden Extraktes an. So kann in einem
4. Prozessschritt
   mit einer adsorptiven Behandlung des aus Prozessschritt 3 erhaltenen Extraktes über polymere Adsorber, wie z.B. RP18 mit einer Partikelgröße von ca.50-100 µm oder HP20 fortgefahren werden. Die genannten Adsorbermaterialien haben sich als besonders geeignet zur weiteren Aufreinigung von Rubus-Extrakt herausgestellt. Dies wurde in einer vorausgehenden Versuchsreihe bewiesen.
   Die Elution des zuvor adsorbierten Extraktes von z.B. HP20-Adsorbem erfolgt in drei Stufen mittels Wasser (2 Bettvolumen), 20%igem Alkohol (1 Bettvolumen) und 40%igem Alkohol (2 Bettvolumen).
   Zur Weiterverarbeitung wird nur die 40%ige Alkohol-Fraktion verwendet. Die erzielbare Ausbeute sinkt dabei auf ca. 1% bezogen auf die eingesetzte Droge ab. Gleichzeitig werden Rubusosidgehalte von ca. 65% bezogen auf die Extrakt-Trockensubstanz erhalten. Als letzter und
5. Prozessschritt
   kann eine Hochanreicherung an Umkehr-Phasen (z.B. Symmetrie C18, Partikelgröße ca.5-10 µM) mittels präparativer Chromatographie erfolgen. Die Ausbeute sinkt dabei auf 0,0 1 % bezogen auf die eingesetzte Droge bei gleichzeitiger Anreicherung der Rubusoside auf >99% bezogen auf die Extrakt-Trockensubstanz.

Alle nach den Prozessstufen 3 und 4 erhaltenen Rubus-Extrakte können nach den allgemein bekannten Verfahren aufkonzentriert, getrocknet und ggf. weiterverarbeitet werden.

Dabei werden je nach Anwendungszweck auch Trägerstoffe wie z.B. Stärken, Stärkederivate, Zucker, Salze etc. verwendet. Für den Einsatz als Flüssig- bzw. Pastösprodukt werden als Trägerstoffe bevorzugt Wasser, Alkohol, Glycerin, Glucosesirupe oder Propylenglycol etc. eingesetzt.

Für den Bereich konzentrierter Produkte, wie z.B. Nahrungsergänzungsmittel (Konzentrate, Kapseln, Tabletten, etc.) können bedingt durch Mengenbegrenzungen in der Rezeptur bevorzugt Extrakte aus den Prozessschritten 4 und 5 verwendet werden.

Die Zusammensetzung eines für den Einsatz als Lebensmittel verwendbaren Extraktes nach Prozessstufe 3 (sprühgetrocknet) lautet:

| | |
|---|---|
| H₂O | : 4,64% |
| Eiweiß (NX6,25) | : 2,79% |
| Fett | : 1,60% |
| Kohlenhydrate * | : 73,61 % |
| Zucker | : 19,10% |
| Glukose | : 9,85% |
| Fruktose | : 9,25% |
| Saccharose | : < 0,1 % |
| Ballaststoffe | : 5,55% |
| Asche | : 11,81 % |
| Natrium | : 647,2 mg/kg |
| Aminosäuren | : 4,3 mg/g |
| L-Prolin | : 2,1 mg/g |
| L-Glutaminsäure | : 0,04 mg/g |
| Rubusoside | : ca. 18 % |

| | |
|---|---|
| * berechnet als Differenz 100-H₂O-Eiweiß-Fett-Asche-Ballaststofie. | |

Der nachfolgenden Tabelle sind Anwendungsbeispiele für drei Getränke entnehmbar, aus der die süßenden Eigenschaften des aus Prozessschritt 3 erhaltenen Rubus-Extraktes entnehmbar. Es sind drei Rezepturen angegeben, nämlich
a) Standardrezeptur (Stdd.) mit Zucker,
b) Standardrezeptur (Stdd.) mit Zucker und Rubus-Extrakt und
c) Standardrezeptur (Stdd.) nur mit Rubus-Extrakt

| | | a)Stdd.-Rezeptur mit Zucker | b)Stdd.-Rezeptur mit Zucker und Rubusextrakt | c) Stdd.-Rezeptur nur mit Rubusextrakt |
|---|---|---|---|---|
| Getränk | Bezeichnung | Menge [g] | Menge [g] | Menge [g] |
| Grüntee Birne | Grüntee-Extrakt | 0,04 | 0,04 | 0,04 |
| | Rubus-Extrakt, Entw.-Ch. 18911388 | - | 0,04 | 0,08 |
| | Birnenaroma | 0,01 | 0,01 | 0,01 |
| | Zitronensäure | 0,03 | 0,03 | 0,03 |
| | Zucker | 1,7 | 0,85 | - |
| Früchtetee | Früchtetee-Extrakt "Erdbeere" | 0,16 | 0,16 | 0,16 |
| | Rubus-Extrakt, Entw.-Ch. 18911388 | - | 0,04 | 0,08 |
| | Zitronensäure | 0,06 | 0,06 | 0,06 |
| | Zucker | 1,7 | 0,85 | - |
| Rooibos- Orange Vanille | Rooibos-Extrakt | 0,075 | 0,075 | 0,075 |
| | Rubus-Extrakt, Entw.-Ch. 18911388 | - | 0,04 | 0,08 |
| | Orangen-Aroma | 0,01 | 0,01 | 0,01 |
| | Vanille-Aroma | 0,008 | 0,008 | 0,008 |
| | Zitronensäure | 0,06 | 0,06 | 0,06 |
| | Zucker | 1,7 | 0,85 | - |
| | mit Osmosewasser auf 100 g auffüllen | | | |

Ein sensorischer Vergleich zeigt, dass das Getränk gemäß Standardrezeptur c), welches ausschließlich den oben beschriebenen Rubus-Extrakt aus Prozessstufe 3 mit der angegebenen Zusammensetzung in der angegebenen Menge enthält, genauso süß schmeckt wie ein mit 1,7% rein zuckergesüßtes Produkt. Natürlich sind auch Mischungen entsprechend der Standardrezeptur b) möglich.

Ein sensorischer Vergleich der Aromaeigenschaften bzw. Intensitäten diverser Aroma-Extrakte, wie z.B. Extrakte u.a. aus der neu entwickelten

Produktreihe "elexia" der Anmelderin (Fenchel, Kamille, Melisse, Pfefferminze, Orangenblüte, Jasminblüte, Grüntee, Schwarztee), zeigt, dass bei gleichem Aromaeinsatz eine Verstärkung des Aromaeindruckes um 10 bis 30% festgestellt werden kann. Das Produkt schmeckt intensiver. Im Umkehrschluss kann deshalb bei gleichem Aromaeindruck weniger Aroma-Extrakt dosiert werden, was zu einer deutlichen Kosteneinsparung führt.

Die sensorischen Vorteile des erfindungsgemäß hergestellten Rubus-Extraktes werden durch die Diagramme in der beigefügten Zeichnung verdeutlicht. Es zeigen:
- Fig. 1: ein Balkendiagramm des sensorischen Aromaeindrucks für ver- schiedene natürliche Extrakte, und
- Fig. 2: ein 3-Achsen-Diagramm der Geschmackseindrücke Süße/Körper/ typisches Aroma für eine Mischung aus Melissenextrakt und Me- lissenöl (0,11 %) ohne und mit Zusatz eines Rubus Suavissimus- Extrakts.

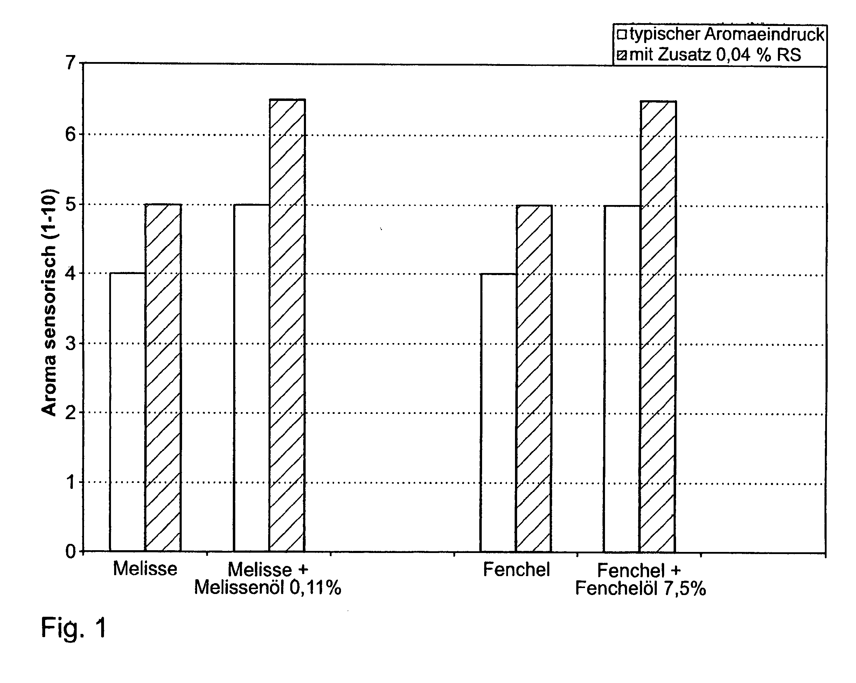

In Fig. 1 ist auf der Hochachse der sensorische Aromaeindruck in Stufen 1-7 für die Aromen bzw. Aroma/Aroma-Öl-Mischungen ohne (leere Balken) und mit Zusatz von 0,04 %-igen Rubus Suavissimus-Extrakt (schraffierte Balken) aufgetragen. Daraus wird erkennbar, dass bei den Aromen Melisse und Fenchel bzw. den Mischungen Melisse/Melissenöl und Fenchel/Fenchelöl bei Zusatz des Rubus-Extraktes der sensorische Aromaeindruck um 1 bis 1,5 Stufen steigt. Dies bedeutet, dass der Aromeneinsatz in einem Getränk, um den gleichen Aromaeindruck zu erzielen, bei Zusatz von Rubus-Extrakt verringert werden kann, was deutliche Kosteneinsparungen bei der Herstellung entsprechender Getränke mit sich bringt.

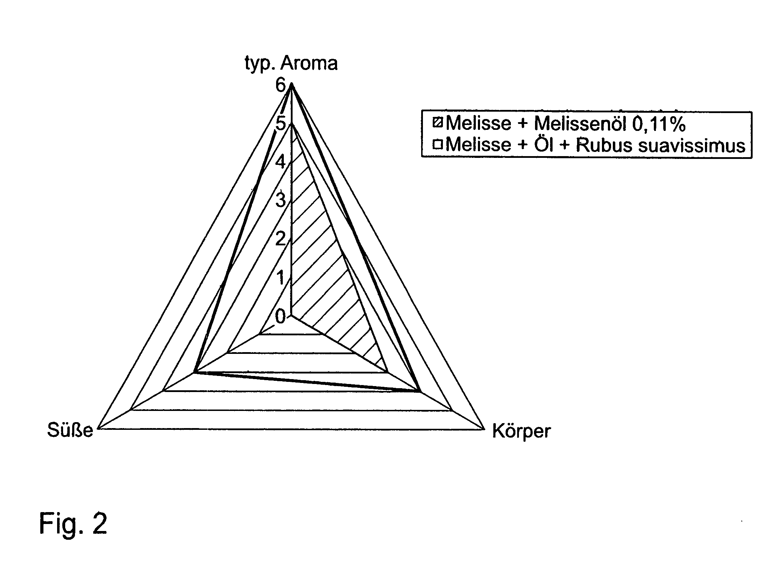

Aus Fig. 2 wird deutlich, dass eine Mischung aus Melissenextrakt und Melissenöl (0,11 %) ohne Zusatz von Rubus Suavissimus-Extrakt (schraffiertes Dreieck) beim Geschmackseindruck "typisches Aroma" die Stufe 5 und beim Geschmackseindruck "Körper" die Stufe 3 erreicht. Der Geschmackseindruck "Süße" ist mit der Stufe 0 nicht gegeben.

Bei Zusatz von Rubus Suavissimus-Extrakt zu dieser Melissenextrakt/Melissenöl-Mischung (dick umrandetes Dreieck in Fig. 2) steigen die Geschmackseindrücke "typisches Aroma" und "Körper" um eine Stufe. Die signifikante Änderung durch den Rubus Suavissimus-Zusatz liegt in dem Geschmackseindruck "Süße", der nun die Stufe 3 erreicht.

## Patentansprüche

1. Verfahren zur Herstellung von Pflanzenextrakten aus Blättern der süßen Brombeere (Rubus chingii, var. Suavissimus), insbesondere für den Einsatz als Lebensmittelzutat,
**gekennzeichnet durch** folgende Verfahrensbasisschritte:
a) wässrige Primärextraktion von vorzugsweise getrockneten süßen Brombeerblättern,
b) alkoholische Umfällung des wässrigen Extraktes aus Basisschritt a),
c) Abtrennen und Verwerfen des Niederschlags aus der Umfällreaktion gemäß Basisschritt b),
d) weitere Umfällung des aus Basisschritt b) und c) verbleibenden Extraktes mit einer Calciumhydroxidlösung,
e) Abtrennen und Verwerfen des Niederschlags aus der Umfällreaktion gemäß Basisschritt d), und
f) Weiterbearbeiten des aus Basisschritt d) und e) verbleibenden Extraktes als Flüssig-, Pastös oder Trockenextrakt.

2. Verfahren nach Anspruch 1, **dadurch gekennzeichnet, dass** die wässrige Primärextraktion gemäß Basisschritt a) mit demineralisiertem Wasser einer Temperatur von 90 °C bis 100 °C durchgeführt wird.

3. Verfahren nach Anspruch 1 oder 2, **dadurch gekennzeichnet, dass** die alkoholische Umfällung gemäß Basisschritt b) mit Ethanol in einer Alkoholkonzentration von 60 % bis 70 % durchgeführt wird.

4. Verfahren nach einem der vorgenannten Ansprüche, **dadurch gekennzeichnet, dass** die Umfällung gemäß Basisschritt d) durch entsprechende Zugabe von Calciumhydroxid in den nach Basisschritt b) und c) verbleibenden Extrakt mit einem pH-Wert von 9 bis 13 durchgeführt wird.

5. Verfahren nach einem der vorgenannten Ansprüche, **dadurch gekennzeichnet, dass** das Abtrennen des Niederschlages aus den Umfällungen gemäß Basisschritt b) und/oder d) durch Zentrifugieren durchgeführt wird.

6. Verfahren nach einem der vorgenannten Ansprüche, **dadurch gekennzeichnet, dass** der aus Basisschritt d) und e) verbleibende Extrakt rückgesäuert wird.

7. Verfahren nach einem der vorgenannten Ansprüche, **dadurch gekennzeichnet, dass** zur Weiterverarbeitung gemäß Basisschritt f) der Extrakt getrocknet, insbesondere sprühgetrocknet wird.

8. Verfahren nach einem der Ansprüche 1 bis 6, **dadurch gekennzeichnet, dass** zur Weiterverarbeitung gemäß Basisschritt f) für eine Anreicherung der Extrakt einer adsorptiven Behandlung über Polymeradsorber unterzogen wird.

9. Verfahren nach Anspruch 8, **dadurch gekennzeichnet, dass** die Elution des adsorbierten Extraktes mehrstufig mittels Wasser und Alkohol erfolgt.

10. Verfahren nach Anspruch 9, **dadurch gekennzeichnet, dass** die Alkoholelution des Extraktes zweistufig mit von Stufe zu Stufe steigenden Werten von Alkoholkonzentration und Bettvolumen erfolgt.

11. Verfahren nach Anspruch 10, **dadurch gekennzeichnet, dass** der in der zweiten Stufe der Alkoholelution erhaltene Extrakt an Umkehrphasen mittels präparativer Chromatographie hochangereichert wird.

12. Extrakt aus Blättern der süßen Brombeere (Rubus chingii, var. Suavissimus), insbesondere für den Einsatz als Lebensmittelzutat, hergestellt nach Anspruch 8, **gekennzeichnet durch** folgende charakteristische Zusammensetzung bezogen auf Trockensubstanz:
H₂O : 4,64%
Eiweiß (NX6,25) : 2,79%
Fett : 1,60%
Kohlenhydrate * _{:} 73,61%
Zucker : 19,10%
Glukose : 9,85%
Fruktose : 9,25%
Saccharose : < 0,1 %
Ballaststoffe : 5,55%
Asche : 11,81%
Natrium : 647,2 mg/kg
Aminosäuren : 4,3 mg/g
L-Prolin : 2,1 mg/g
L-Glutaminsäure : 0,04 mg/g
Rubusoside : ca. 18 %
* berechnet als Differenz 100-H₂O-Eiweiß-Fett-Asche-Ballaststoffe.

## Claims

1. Method for producing plant extracts from leaves of the sweet blackberry (Rubus chingii var. suavissimus), in particular for use as a food ingredient,
**characterised by** the following basic method steps:
a) aqueous primary extraction of preferably dried sweet blackberry leaves;
b) alcoholic precipitation of the aqueous extract obtained from basic step a),
c) separating and discarding the precipitate from the precipitation reaction according to basic step b),
d) further precipitation of the remaining extract from basic step b) and c) with a calcium hydroxide solution,
e) separating and discarding the precipitate obtained from the precipitation reaction according to basic step d), and
f) further processing the remaining extract from basic step d) and e) as a liquid, paste or dry extract.

2. Method according to claim 1, **characterised in that** the aqueous primary extraction according to basic step a) is performed with demineralised water at a temperature of 90 °C to 100 °C.

3. Method according to claim 1 or 2, **characterised in that** the alcoholic precipitation according to basic step b) is performed with ethanol in an alcohol concentration of 60 % to 70 %.

4. Method according to any one of the preceding claims, **characterised in that** the precipitation according to basic step d) is performed by the corresponding addition of calcium hydroxide to the extract remaining after basic step b) and c) with a pH value of 9 to 13.

5. Method according to any one of the preceding claims, **characterised in that** the separation of the precipitate from the precipitations according to basic step b) and/or d) is performed by centrifuge.

6. Method according to any one of the preceding claims, **characterised in that** the remaining extract from the basic step d) and e) is reacidified.

7. Method according to any one of the preceding claims, **characterised in that** for further processing according to basic step f) the extract is dried, in particular spray dried.

8. Method according to one of claims 1 to 6, **characterised in that** for further processing according to basic step f) for enrichment the extract undergoes an adsorptive treatment with polymer adsorbers.

9. Method according to claim 8, **characterised in that** the elution of the adsorbed extract is performed in multiple stages by means of water and alcohol.

10. Method according to claim 9, **characterised in that** the alcohol elution of the extract is performed in two stages with levels of alcohol concentration and bed volume increasing from stage to stage.

11. Method according to claim 10, **characterised in that** the extract obtained in the second stage of the alcohol elution is highly enriched in reversed phases by means of preparative chromatography.

12. Extract of leaves of sweet blackberry (Rubus chingii, var. suavissimus), in particular for use as a food ingredient, produced according to claim 8, **characterised by** the following characteristic composition relative to the dry material:
| | |
|---|---|
| H₂O | : 4.64% |
| protein (NX6.25) | : 2.79% |
| fat | : 1.60% |
| carbohydrate * | : 73.61% |
| sugar | : 19.10% |
| glucose | : 9.85% |
| fructose | : 9.25% |
| sucrose | : < 0.1 % |
| roughage | : 5.55% |
| ash | : 11.81% |
| sodium | : 647.2 mg/kg |
| amino acids | : 4.3 mg/g |
| L-proline | : 2.1 mg/g |
| L-glutamic acid | : 0.04 mg/g |
| Rubusoside | : about 18%. |
| | |
|---|---|
| * calculated as the difference 100-H₂O-protein-fat-ash-roughage. | |

## Revendications

1. Procédé de fabrication de substances d'extraction de plantes à partir de feuilles de mûre sucrée (rubus chingii, var. suavissimus)) en particulier pour l'utilisation en tant qu'additif alimentaire
**caractérisé par** les étapes de base suivantes du procédé:
a) extraction primaire aqueuse de feuilles de mûre sucrée, de préférence séchées,
b) reprécipitation alcoolique de l'extrait aqueux de l'étape de base a),
c) séparation et mise à l'écart du précipité provenant de la réaction de reprécipitation selon l'étape de base b),
d) nouvelle reprécipitation de l'extrait résiduel des étapes de base b) et c) avec une solution d'hydroxyde de calcium,
e) séparation et mise à l'écart du précipité provenant de la réaction de reprécipitation selon l'étape de base d), et
f) poursuite du traitement de l'extrait restant après les étapes de base d) et e) sous forme d'un extrait liquide, pâteux ou sec.

2. Procédé selon la revendication 1 **caractérisé en ce que** l'extraction primaire aqueuse est effectuée selon l'étape de base a) avec de l'eau déminéralisée à une température entre 90 °C et 100 °C.

3. Procédé selon les revendications 1 ou 2 **caractérisé en ce que** la reprécipitation alcoolique est réalisée selon l'étape de base b) avec de l'éthanol à une concentration alcoolique de 60 % à 70 %.

4. Procédé selon l'une des revendications précitées, **caractérisé en ce que** la reprécipitation est effectuée selon l'étape de base d) par l'addition appropriée d'hydroxyde de calcium à l'extrait résiduel après l'étape de base b) et c) à une valeur de pH entre 9 et 13.

5. Procédé selon l'une des revendications précitées **caractérisé en ce que** la séparation du précipité provenant des reprécipitations selon les étapes de base b) et/ou d) est effectuée par centrifugation.

6. Procédé selon l'une des revendications précitées **caractérisé en ce que** l'extrait résiduel après les étapes de base d) et e) est de nouveau acidifié.

7. Procédé selon l'une des revendications précitées **caractérisé en ce que** l'extrait est séché, en particulier, est séché par pulvérisation pour le traitement ultérieur selon l'étape de base f).

8. Procédé selon l'une des revendications de 1 à 6 **caractérisé en ce que**, pour la concentration, l'extrait soit soumis à un traitement par adsorption sur un adsorbant polymère pour le traitement ultérieur selon l'étape de base f).

9. Procédé selon la revendication 8 **caractérisé en ce que** l'élution de l'extrait adsorbé se déroule en plusieurs étapes au moyen d'eau et d'alcool.

10. Procédé selon la revendication 9 **caractérisé en ce que** l'élution alcoolique de l'extrait se déroule en deux étapes avec des valeurs croissantes de concentrations en alcool d'étape en étape et de volume de lit.

11. Procédé selon la revendication 10 **caractérisé en ce que** l'extrait obtenu dans la deuxième étape de l'élution alcoolique est fortement concentré en phases inverses au moyen de chromatographie préparative.

12. Extrait de feuilles de mûre sucrée (rubus chingii, var. suavissimus), en particulier pour l'utilisation en tant qu'additif alimentaire, fabriqué selon la revendication 8, **caractérisé par** la composition caractéristique suivante par rapport à la substance sèche :
| | |
|---|---|
| H₂O | : 4, 64 % |
| Albumine (NX6, 25) | : 2,79 % |
| Graisses | : 1,60 % |
| Hydrates de carbone* | : 73,61 % |
| Sucres | : 19,10 % |
| Glucose | : 9,85 % |
| Fructose | : 9,25 % |
| Saccharose | : < 0,1 % |
| Charges inertes | : 5,55 % |
| Cendres | : 11,81 % |
| Sodium | : 647,2 mg/kg |
| Acides aminés | : 4,3 mg/g |
| L-proline | : 2,1 mg/g |
| Acide L-glutamique | : 0,04 mg/g |
| Rubusoside | : Environ 18 % |
| | |
|---|---|
| * Calculé par la différence 100 - H₂O - Albumine - Graisses - Cendres - Charges inertes. | |
